# EUROPÄISCHE PATENTSCHRIFT

(11) **EP 2 917 620 B1**
(45) Veröffentlichungstag und Bekanntmachung des Hinweises auf die Patenterteilung: **04.01.2017**
(21) Anmeldenummer: 13786672.9
(22) Anmeldetag: 07.11.2013
(51) Int. Cl.: F16K 11/074, F16K 31/04

(54) **VENTILEINRICHTUNG**
VALVE DEVICE
SYSTÈME DE SOUPAPE

(30) Priorität: 07.11.2012 DE 102012022213
(43) Veröffentlichungstag der Anmeldung: 16.09.2015
(73) Patentinhaber: Mack & Schneider GmbH, 70794 Filderstadt (DE)
(72) Erfinder: BACHOFER, Steffen, 70794 Filderstadt (DE)
(74) Vertreter: Clarenbach, Carl-Philipp
(86) Internationale Anmeldenummer: PCT/EP2013/073221
(87) Internationale Veröffentlichungsnummer: WO 2014/072376

(56) Entgegenhaltungen:
- EP-A1- 1 967 777
- WO-A1-02/059515
- WO-A2-2010/142965
- DE-A1- 2 438 875
- DE-A1-102009 024 361
- DE-U1- 9 212 236

## Beschreibung

Die Erfindung betrifft eine Ventileinrichtung gemäss den oberbegrifflichen Merkmalen von Anspruch 1, wie beispielsweise aus Dokument WO-A-02/059515 bekannt.

Ventileinrichtungen werden beispielsweise in Kraftfahrzeugen zur Regulierung von Kühlwasserkreisläufen oder auch bei Getränkeautomaten eingesetzt. Aus der US 5,950,576 A ist beispielsweise eine Scheibenventileinrichtung bekannt, die ein Scheibenventil und eine Antriebseinheit umfasst. Das Scheibenventil weist ein erstes Gehäuse auf, in welchem die zum Einstellen gewünschter Durchströmungsquerschnitte notwendigen Elemente, wie beispielsweise eine drehbar gelagerte Ventilscheibe, angeordnet sind. Die Antriebseinheit weist eine elektromechanische Antriebseinrichtung auf, die in einem zweiten Gehäuse angeordnet ist. Dabei ist das erste Gehäuse beabstandet zu dem zweiten Gehäuse angeordnet, wobei eine Antriebswelle der Antriebseinrichtung aus dem zweiten Gehäuse heraus bis in das erste Gehäuse hineinragt, wo es formschlüssig zur Drehmitnahme mit der Ventilscheibe verbunden ist. Die Montage der Scheibenventileinrichtung gestaltet sich dadurch verhältnismäßig schwierig und ist insbesondere für die Verwendung eines einfachen Baukastensystems bei der Montage nicht geeignet.

Die gattungsbildende Offenlegungsschrift WO 02/059515 A1 offenbart eine Ventileinrichtung, bei welcher die Gehäuse einer Antriebseinheit und einer Ventileinheit über ein umfangsseitig geschlossenes und an beiden Gehäusen befestigtes Zylinderelement im Bereich einer Koppeleinrichtung miteinander verbunden sind.

Der Erfindung liegt die Aufgabe zugrunde, eine Ventileinrichtung zu schaffen, die auf einfache und kostengünstige Art und Weise eine verbesserte Verbindung zwischen den Gehäusen bietet.

Die der Erfindung zugrunde liegende Aufgabe wird durch eine Ventileinrichtung mit den Merkmalen des Anspruchs 1 gelöst. Die erfindungsgemäße Ventileinrichtung, insbesondere Scheibenventileinrichtung, hat den Vorteil, dass das Ventil, insbesondere Scheibenventil, und die Antriebseinheit im Bereich zwischen den Gehäusen miteinander zur Drehmomentübertragung verbunden werden. Dadurch liegt die Koppelstelle von Antriebseinheit zu Ventil/Scheibenventil in einem leicht zugängigen Bereich und erlaubt, dass das Scheibenventil und die Antriebseinheit vollständig vormontiert werden können, bevor sie zusammengeführt werden, um die Ventileinrichtung beziehungsweise Scheibenventileinrichtung zu bilden. Dadurch wird die Montage vereinfacht und es lassen sich auf einfache Art und Weise unterschiedliche Ventile/Scheibenventile mit unterschiedlichen Antriebseinheiten kombinieren, wodurch die Verwendung eines Baukastensystems bei der Montage ermöglicht wird. Die Erfindung zeichnet sich dadurch aus, dass das Scheibenventil eine Steuerwelle und die Antriebseinheit eine mit der Antriebseinrichtung wirkverbundene und mit der Steuerwelle durch eine Koppeleinrichtung wirkverbundene/wirkverbindbare Antriebswelle aufweist, und dass die Koppeleinrichtung zwischen dem ersten und dem zweiten Gehäuse angeordnet ist. Somit ragt sowohl aus dem ersten als auch aus dem zweiten Gehäuse jeweils eine Welle in den Zwischenraum zwischen den beiden Gehäusen, um dort durch die Koppeleinrichtung miteinander wirkverbunden zu werden. Dadurch findet die Drehmomentübertragung von der Antriebseinheit auf das Scheibenventil in dem Spalt zwischen dem ersten und dem zweiten Gehäuse statt, wodurch sich die oben beschriebenen Vorteile ergeben.

Gemäß einer vorteilhaften Weiterbildung der Erfindung ist vorgesehen, dass die Koppeleinrichtung als formschlüssige Kupplung ausgebildet ist. Die formschlüssige Kupplung erlaubt die direkte Drehmomentübertragung von der Steuerwelle auf die Antriebswelle. Zweckmäßigerweise ist die formschlüssige Kupplung in Drehmitnahmerichtung zumindest im Wesentlichen spielfrei ausgebildet, so dass eine genaue Einstellung beziehungsweise Betätigung des Scheibenventils gewährleistet wird. Vorzugsweise ist die formschlüssige Kupplung axial gesehen spielbehaftet ausgebildet, um temperaturbedingte oder toleranzbedingte Längenunterschiede der beiden Wellen und/oder der Gehäuse kompensieren zu können. Alternativ ist es auch denkbar, die Koppeleinrichtung als kraftschlüssige Kupplung auszubilden.

Besonders bevorzugt ist die Koppeleinrichtung als Zahn- oder Klauenkupplung ausgebildet. Dabei kann die Koppeleinrichtung durch auf die Antriebswelle und die Steuerwelle aufsetzbare Drehmitnahmeelemente oder integral durch die Antriebswelle und die Steuerwelle selbst einstückig ausgebildet sein. Bei der Zahn- oder Klauenkupplung können die Zähne beziehungsweise Klauen gemäß einer Ausführungsform an der Stirnseite der jeweiligen Welle angeordnet sein.

Gemäß einer bevorzugten Ausführungsform der Erfindung ist vorgesehen, dass die Koppeleinrichtung von einer Außenverzahnung der Steuerwelle und einer mit der Außenverzahnung in Eingriff stehenden Innenverzahnung der Antriebswelle gebildet wird. Die Steuerwelle ragt somit bereichsweise mit ihrem freien Ende in einen Hohlwellenabschnitt der Antriebswelle hinein, um dort mittels Außenverzahnung und Innenverzahnung die Drehmomentübertragung zu bewirken. Die Koppeleinrichtung wird hierbei durch Antriebswelle und Steuerwelle selbst gebildet. Natürlich ist auch eine umgekehrte Ausbildung möglich, bei welcher die Außenverzahnung an der Antriebswelle und die Innenverzahnung an der Steuerwelle vorgesehen ist. Allgemein lässt sich sagen, dass die Antriebswelle und die Steuerwelle bevorzugt durch zueinander komplementäre Polygonformen miteinander formschlüssig zur Drehmomentübertragung verbunden sind.

Erfindungsgemäß ist vorgesehen, dass der Koppeleinrichtung ein Spritzschutz zugeordnet ist. Der Spritzschutz verhindert, dass im Betrieb Feuchtigkeit, beispielsweise Spritzwasser, zur beziehungsweise auf die Koppeleinrichtung gelangt und von dieser weiter in die Antriebseinheit oder in das Scheibenventil. Durch den Spritzschutz wird die Lebensdauer der Ventileinrichtung insgesamt erhöht.

Erfindungsgemäß ist vorgesehen, dass der Spritzschutz wenigstens eine die Koppeleinrichtung umfangsseitig zumindest im Wesentlichen umgebende erste Schutzwand aufweist. Diese Schutzwand kann vollständig durchgehend oder mit einer oder mehreren Aussparungen beziehungsweise Unterbrechungen ausgebildet sein, die insbesondere zur Belüftung und Kühlung der Koppeleinrichtung dienen. Vorzugsweise erstreckt sich die Schutzwand derart zwischen den beiden Gehäusen, dass sie von einem Gehäuse zumindest im Wesentlichen bis zum anderen Gehäuse reicht. Die Aussparungen in der Schutzwand dienen bevorzugt auch der Entwässerung im Falle einer Bauteilleckage des Scheibenventils. Bei einem Fehlerfall beziehungsweise Defekt oder auch wenn aufgrund extremer Systemzustände eine kurzzeitige Leckage auftritt, kann durch die Aussparungen Flüssigkeit nach außen entweichen, so dass die Antriebseinheit vor aus dem Ventil austretender Flüssigkeit geschützt ist.

Erfindungsgemäß ist vorgesehen, dass der Spritzschutz wenigstens eine die Koppeleinrichtung umfangsseitig zumindest im Wesentlichen umgebende zweite Schutzwand aufweist, die einen größeren oder kleineren Durchmesser als die erste Schutzwand aufweist, um zusammen mit der ersten Schutzwand eine Labyrinthdichtung für die Koppeleinrichtung zu bilden. Auch die zweite Schutzwand ist dabei vorzugsweise mit einer oder mehreren Aussparungen beziehungsweise Unterbrechungen zur Belüftung oder Kühlung der Koppeleinrichtung ausgebildet. Besonders bevorzugt sind die Aussparungen der ersten Schutzwand und der zweiten Schutzwand versetzt zueinander angeordnet, um einen vollumfänglichen Spritzschutz zu gewährleisten. Durch die unterschiedlichen Durchmesser werden die erste und die zweite Schutzwand bei einer Montage ineinander gesteckt, wozu sie zweckmäßigerweise koaxial zueinander im montierten Zustand des Gehäuses angeordnet sind.

Durch die unterschiedlichen Durchmesser wird dabei vorteilhafterweise ein Zwischenraum zwischen den Schutzwänden gebildet, der insbesondere zur Entwässerung genutzt werden kann. Unabhängig davon, wie das Ventil bezüglich der Antriebseinheit montiert wird, also im Wesentlichen unabhängig von der Drehwinkelposition von Ventil zur Antriebseinheit, wird somit eine Entwässerung nach außen hin zu jeder Zeit gewährleistet.

Erfindungsgemäß ist vorgesehen, dass die erste Schutzwand einstückig mit dem ersten Gehäuse und die zweite Schutzwand einstückig mit dem zweiten Gehäuse ausgebildet ist. Dadurch wird durch Zusammenführen der beiden Gehäuse die Labyrinthdichtung mittels der beiden Schutzwände hergestellt. Die Schutzwände sind dabei bevorzugt an ihren jeweiligen freien Stirnseiten zumindest abschnittsweise beabstandet zu dem jeweils gegenüberliegenden Gehäuse angeordnet beziehungsweise ausgebildet, um eine zusätzliche Lüftung/Kühlung zu gewährleisten, und um insbesondere eine überbestimmte Lagerung der Gehäuse aneinander zu vermeiden.

Erfindungsgemäß ist vorgesehen, dass das erste und/oder das zweite Gehäuse wenigstens einen Abstandhalter aufweist, der insbesondere als Anschraubdom ausgebildet ist. Die Abstandhalter sichern den Abstand zwischen den beiden Gehäusen und die Positionierung der Wellenenden von Antriebswelle und Steuerwelle zueinander. Zumindest einer der Abstandhalter kann dabei auch durch den Spritzschutz beziehungsweise durch eine der Schutzwände gebildet sein. Durch die bevorzugte Ausbildung der Abstandshalter jeweils als Anschraubdom, bieten die Abstandhalter gleichzeitig die Befestigungseinrichtung zum Befestigen der beiden Gehäuse aneinander. Der jeweilige Anschraubdom zeichnet sich durch ein Innengewinde aus, das einstückig von dem Anschraubdom oder durch ein in den jeweiligen Anschraubdom eingesetztes Gewindeelement gebildet wird, und in welches eine Schraube zur Befestigung des einen Gehäuses an dem anderen Gehäuse eingeschraubt werden kann.

Im Folgenden soll die Erfindung anhand der Zeichnungen näher erläutert werden. Dazu zeigen:
- Figur 1: eine Scheibenventileinrichtung in einer perspektivischen Darstellung,
- Figur 2: ein Scheibenventil der Scheibenventileinrichtung in einer Längsschnittdarstellung,
- Figur 3: das Scheibenventil in einer Querschnittsdarstellung,
- Figuren 4A und 4B: eine Dichtscheibe des Scheibenventils in unterschiedlichen perspektivischen Darstellungen,
- Figur 5: eine mit der Dichtscheibe zusammenwirkende Ventilscheibe in einer perspektivischen Darstellung,
- Figur 6: eine Vormontagebaugruppe des Scheibenventils in einer perspektivischen Darstellung,
- Figuren 7A und 7B: eine Verdrehsicherung des Scheibenventils in unterschiedlichen Darstellungen,
- Figur 8: eine Arretiervorrichtung der Vormontagebaugruppe,
- Figur 9: einen Deckel des Scheibenventils in einer perspektivischen Unteransicht,
- Figur 10: den Deckel des Scheibenventils in einer perspektivischen Draufsicht und
- Figur 11: einen Teil der Scheibenventileinrichtung in einer Längsschnittdarstellung.

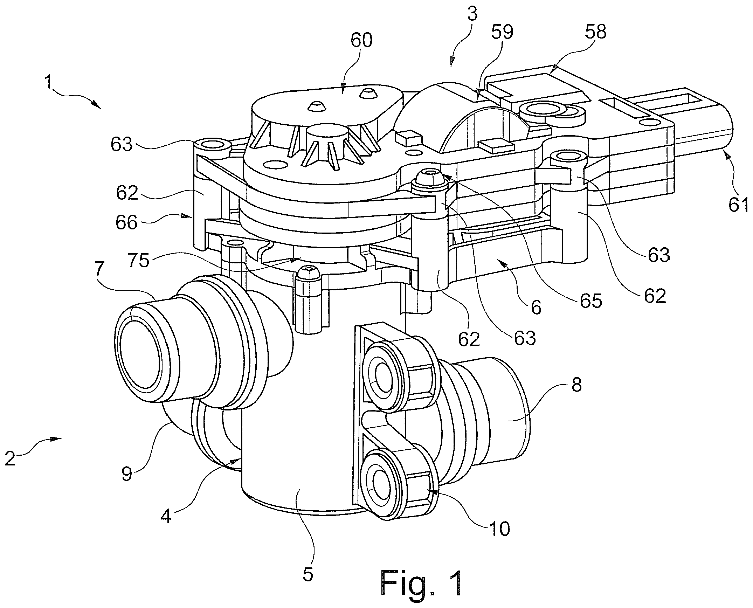

Figur 1 zeigt eine als Scheibenventileinrichtung ausgebildete Ventileinrichtung 1, die ein Scheibenventil 2 sowie eine Antriebseinheit 3 aufweist, in einer perspektivischen Darstellung.

Das Scheibenventil 2 weist ein Gehäuse 4 auf, welches von einem Verteilergehäuse 5 und einem Deckel 6 gebildet wird. Das Verteilergehäuse 5 weist drei Anschlüsse auf, von denen einer als Zulaufanschluss 7, und die beiden anderen als Ablaufanschlüsse 8 beziehungsweise 9 ausgebildet sind. Außerdem weist das Verteilergehäuse 5 eine Haltevorrichtung 10 zum Befestigen der Ventileinrichtung 1, beispielsweise an einer Karosserie eines Kraftfahrzeugs, auf.

An dem Deckel 6 ist die Antriebseinheit 3 montiert, die insbesondere als elektromotorischer Stellantrieb ausgebildet ist und hierzu einen nicht näher dargestellten Elektromotor 59 sowie ein mit dem Elektromotor 59 wirkverbundenes Getriebe 60 mit einer Antriebswelle 70 aufweist, die mit einer Steuerwelle des Scheibenventils 2 koppelbar ist, um ein an dem Zulaufanschluss 7 bereitgestelltes Medium auf die Ablaufanschlüsse 8, 9 wunschgemäß zu verteilen. Hierauf soll weiter unten näher eingegangen werden.

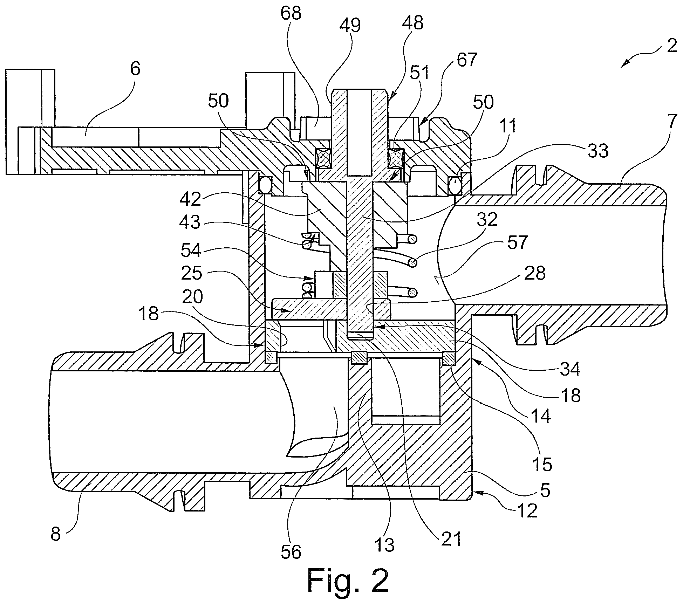

Figur 2 zeigt hierzu das Scheibenventil 2 in einer Längsschnittdarstellung. Das Verteilergehäuse 5 ist im Wesentlichen becherförmig ausgebildet, so dass es im Längsschnitt gesehen eine U-förmige Grundform aufweist. Die Anschlüsse 7, 8, 9 sind vorliegend einstückig mit dem Verteilergehäuse 5 ausgebildet. Der Deckel 6 verschließt das offene Ende des Verteilergehäuses 5, wobei zwischen Deckel 6 und Verteilergehäuse 5 zusätzlich ein Dichtungselement 11, das vorliegend als O-Ring ausgebildet ist, vorgesehen ist. Der Zulaufanschluss 7 mündet - axial gesehen - oberhalb des Ablaufanschluss 8 in das Verteilergehäuse 5, also nahe zu dem Deckel 6. Von dem dem Deckel 6 gegenüberliegenden Boden 12 des Verteilergehäuses 5 geht eine Trennwand 13 aus, die sich parallel zur Längserstreckung des Verteilergehäuses 5 beziehungsweise axial erstreckt und oberhalb des Anschlusses 8 einen Zwischenboden 14 mit ihrer freien Stirnseite bildend endet.

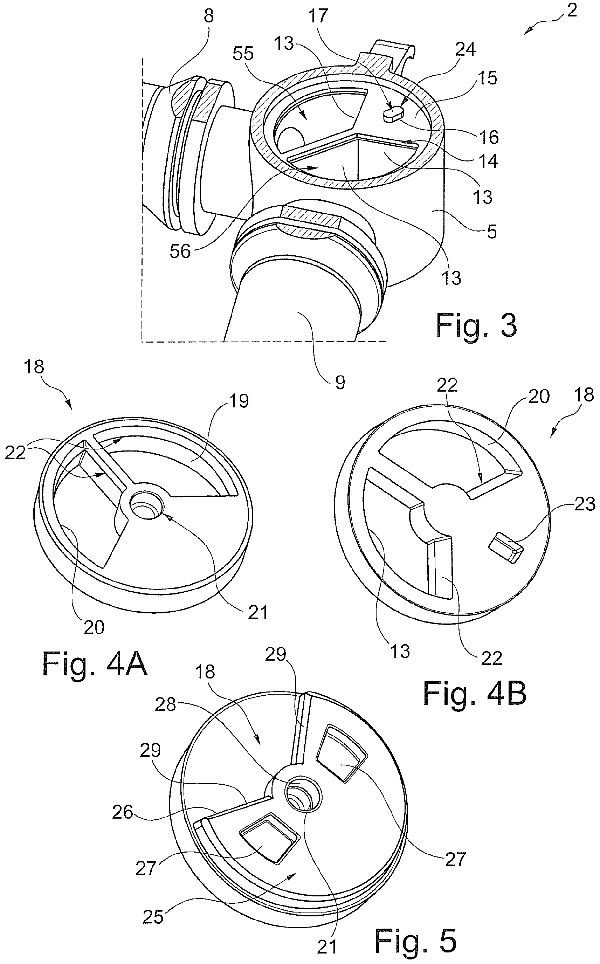

Figur 3 zeigt hierzu in einer Querschnittdarstellung des Scheibenventils 2 eine Draufsicht auf den Zwischenboden 14 beziehungsweise auf das Verteilergehäuse 5 oberhalb der Ablaufanschlüsse 8 und 9. Die Trennwand 13 bildet zwei Kammern 55, 56, in welche jeweils einer der Ablaufanschlüsse 8, 9 mündet. Die Kammern 55 und 56 machen dabei etwa zwei Drittel des Verteilgehäuses 5 aus, während ein verbleibendes Drittel von dem Zwischenboden 14 gebildet wird. Der Zwischenboden 14 erstreckt sich zum Teil stegförmig entlang der Innenseite der Gehäusewand über den gesamten Umfang des Verteilergehäuses 5, um eine durchgehende Auflagefläche zu bilden. Ergänzt wird er durch die freistehende Stirnseite der Trennwand 13. Die Kammern 55 und 56 erstrecken sich somit im Wesentlichen jeweils über ungefähr 120° des kreisförmigen Verteilergehäuse 5,
während ein Großteil des Zwischenbodens 14 von den verbleibenden 120° durch die Trennwand 13 gebildet wird.

Auf dem Zwischenboden 14 liegt eine Profildichtung 15 auf, deren Kontur im Wesentlichen der Kontur des Zwischenbodens 14 entspricht und elastisch verformbar ausgebildet ist. Die Profildichtung 15 weist einen zusätzlichen Durchbruch 16 auf, durch welchen ein Axialvorsprung 17 des Zwischenbodens 14 zum Bilden einer Verdrehsicherung 24 für die Profildichtung 15 hindurch ragt. Dabei ist die Höhe des Axialvorsprungs 17 derart gewählt, dass sie über die Profildichtung 15 hinaus vorsteht.

Figuren 4A und 4B zeigen eine keramische Dichtscheibe 18 in zwei perspektivischen Darstellungen. Gemäß Figur 2 liegt die Dichtscheibe 18 auf der Profildichtung 15 auf, wobei die Kontur der Dichtscheibe 18 zumindest im Wesentlichen der Kontur der Profildichtung 15 beziehungsweise des Zwischenbodens 14 entspricht.

Figur 4A zeigt eine Draufsicht auf die Dichtscheibe 18 aus Richtung des Deckels 6 gemäß Figur 2. Die Dichtscheibe 18 weist zwei Durchströmungsöffnungen 19, 20 auf, die ebenfalls jeweils ein Kreissegment darstellen, das sich über etwa 120° entsprechend den Kammern 55 und 56 erstreckt. Auf der dem Deckel 16 zugewandten Stirnseite weist die Dichtscheibe 18 außerdem eine Lageraufnahme 21 auf, die mittig in der Dichtscheibe 18 als zylinderförmige Vertiefung ausgebildet ist. Auf der gleichen Stirnseite sind außerdem die Durchströmungsöffnungen 19, 20 jeweils mit einer Anphasung 22 versehen, die zur Verbesserung der Strömungsverhältnisse dienen.

Vorteilhafterweise sind derartige Anphasungen 22 auch auf der Rückseite der Dichtscheibe 18 im Bereich der Durchströmungsöffnungen 19, 20 vorgesehen, wie in Figur 4B gezeigt. Außerdem weist die Dichtscheibe 18 auf ihrer dem Deckel 16 abgewandten Stirnseite eine Aufnahmevertiefung 23 auf, deren Kontur im Wesentlichen der Kontur des Axialvorsprungs 17 entspricht und zur zumindest bereichsweisen Aufnahme des Axialvorsprungs 17 dient, um eine Verdrehsicherung für die Dichtscheibe 18 auf dem Zwischenboden 14 zu bilden. Durch diese und durch die formschlüssige Verdrehsicherung 24 wird eine sichere Anordnung der Drehscheibe 18 und der Profildichtung 15 in dem Verteilergehäuse 5 auf einfache und kostengünstige Art und Weise gewährleistet.

Figur 5 zeigt eine weitere Draufsicht auf die Dichtscheibe 18, und zwar auf die dem Deckel 6 zugewandte Stirnseite. Dabei ist auf der Dichtscheibe 18 außerdem eine Ventilscheibe 25 angeordnet, die ebenfalls aus Keramik hergestellt ist, und deren Außendurchmesser im Wesentlichen dem Außendurchmesser der Dichtscheibe 18 entspricht. Im vorliegenden Ausführungsbeispiel ist der Außendurchmesser der Ventilscheibe 25 geringfügig kleiner ausgebildet, um einen Reibkontakt mit der Oberfläche der Innenseite des Verteilergehäuses 5 zu vermeiden, wie auch in Figur 2 gezeigt. Die Ventilscheibe 25 ist kreissegmentförmig ausgebildet und erstreckt sich über ein Kreissegment von etwa 240°. Die verbleibenden 120° der Ventilscheibe 25 sind frei und randoffen ausgebildet, um eine Durchströmungsöffnung 26 zu bilden, die bei einer Überlappungsstellung mit zumindest einer der Durchströmungsöffnungen 19, 20 der Dichtscheibe 18 einen Durchströmungsquerschnitt einstellt. Je nach Drehstellung der Ventilscheibe 25 ist somit ein gewünschter Durchströmungsquerschnitt zwischen dem Zulaufanschluss 7 und zumindest einem der Ablaufanschlüsse 8, 9 einstellbar. Die Ventilscheibe 25 liegt flächig auf der Dichtscheibe 18 auf und weist auf ihrer der Ventilscheibe 18 abgewandten Stirnseite zwei wannenförmige Aussparungen 27 auf, die beidseitig des Mittelpunkts der Ventilscheibe 25 angeordnet und spiegelsymmetrisch, jedoch nicht punktsymmetrisch ausgebildet sind, so dass eine Falschmontage des Scheibenventils 2, wie später näher erläutert, vermieden wird. Weiterhin weist die Ventilscheibe 25 mittig einen kreisförmigen Durchbruch 28 auf, der eine Verlängerung der Lageraufnahme 21 bildet und insofern ebenfalls eine kreisförmige Kontur aufweist. Auch die Ventilscheibe 25 ist an der Durchströmungsöffnung 26 mit Anphasungen 29 für ein verbessertes Durchströmungsverhalten versehen.

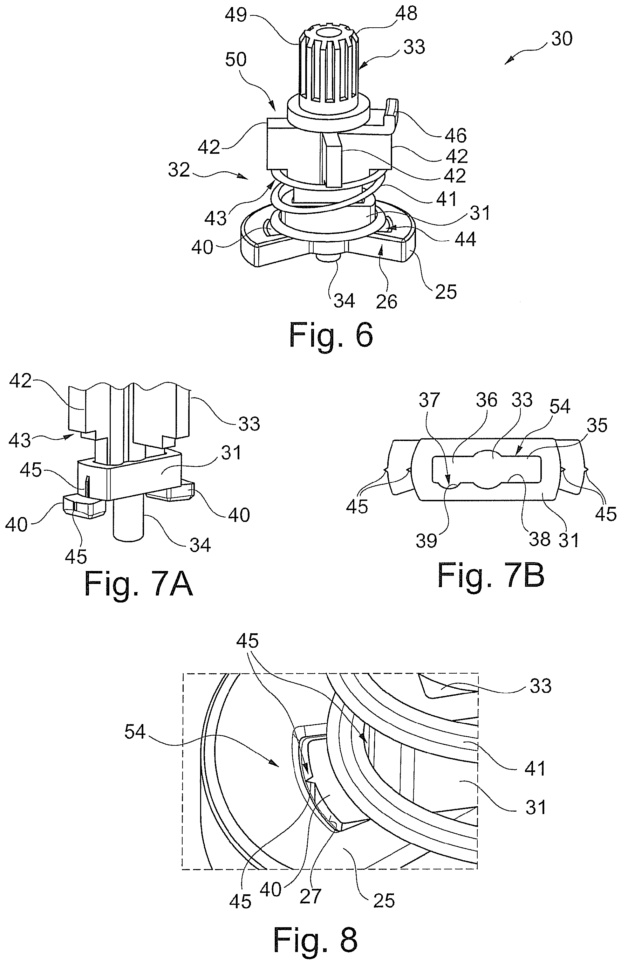

Figur 6 zeigt in einer perspektivischen Darstellung eine Vormontagebaugruppe 30, die aus der Ventilscheibe 25, einem Zwischenelement 31, einem Federelement 32 und einer Steuerwelle 33 besteht.

Die Steuerwelle 33 ragt mit einem freien Ende 34 durch den Durchbruch 28 der Ventilscheibe 25 hindurch, um wie in Figur 2 gezeigt, in die Lageraufnahme 21 einzugreifen. Dazu ist das freie Ende 34 der Steuerwelle 33 ebenfalls kreiszylinderförmig ausgebildet, wobei der Außendurchmesser des freien Endes 34 und der Innendurchmesser der Lageraufnahme 21 derart gewählt sind, dass sie zusammen eine Radialgleitlagerung für die Steuerwelle 33 bilden.

Beabstandet zu dem freien Ende 34 weist die Steuerwelle 33, wie in Figuren 7A und 7B näher dargestellt, eine asymmetrische Querschnittskontur auf. Figur 7B zeigt hierzu einen Querschnitt durch die Steuerwelle 33 im Bereich des Zwischenelementes 31. Die Steuerwelle 33 weist hierbei zwei sich gegenüberliegende radial von der Steuerwelle 33 abstehende Vorsprünge 35, 36 auf, wobei der Vorsprung 36 an einer Seitenwand einen zusätzlichen Vorsprung 37 aufweist, der im vorliegenden Ausführungsbeispiel eine gewölbte Kontur aufweist. Das Zwischenelement 31 weist eine der Kontur der Steuerwelle 33 im Bereich der Vorsprünge 36, 35 entsprechende Öffnung 38 auf. Die Öffnung 38 weist seitlich eine zusätzliche Vertiefung 39 auf, in welche der zusätzliche Vorsprung 37 einschiebbar ist. Die Steuerwelle 33 und das Zwischenelement 31 können somit nur auf eine einzige Art und Weise miteinander verbunden werden. Eine Falschmontage wird dadurch sicher verhindert.

Figur 7A zeigt eine perspektivische Darstellung der Steuerwelle 33 mit dem Zwischenelement 31. Das Zwischenelement 31 weist auf seiner der Ventilscheibe 25 zugewandten Seite zwei Stützfüße 40 auf, die vorzugsweise einstückig mit dem Zwischenelement 31 ausgebildet und in die Aussparungen 27 der Ventilscheibe 25 einbringbar sind beziehungsweise eingreifen. Aufgrund der asymmetrischen Formgebung der Aussparungen 27 und der asymmetrischen Ausbildung der Stützfüße 40 ist auch hier nur eine einzige Montageposition für Steuerwelle 33 und Ventilscheibe 25 möglich. Dadurch wird insgesamt eine zwischen Steuerwelle 33 und Ventilscheibe 25 formschlüssig wirkende Verdrehsicherung 54 gebildet.

Das Federelement 32 ist im vorliegenden Ausführungsbeispiel als Schraubenfeder 41 ausgebildet. Die Schraubenfeder 41 ist zwischen den seitlich vorstehenden Stützfüßen 40 des Zwischenelements 31 und mehreren radial vorstehenden Stützvorsprüngen 42 der Steuerwelle 33 axial gehalten. Die Stützvorsprünge 42 sind gleichmäßig über den Umfang der Steuerwelle 33 verteilt angeordnet und einstückig mit dieser ausgebildet. Vorzugsweise gehen zwei gegenüberliegende Stützvorsprünge 42 dabei in die seitlichen Vorsprünge 35 und 26 über. Die Stützvorsprünge 42 bilden zusammen einen ersten Axialanschlag 43 für die Schraubenfeder 41, während die Stützfüße 40 einen zweiten Axialanschlag für die Schraubenfeder 41 bilden. Bei der Vormontage wird die Schraubenfeder 41 auf die Steuerwelle 33 bis an den ersten Axialanschlag 43 aufgeschoben, anschließend wird das Zwischenelement 31 wie zuvor beschrieben auf die Steuerwelle 33 aufgeschoben und zuletzt die Ventilscheibe 25, so dass die Füße 40 in die Aussparungen 27 eingreifen.

Zur Arretierung der Vormontagebaugruppe 30 weist das Zwischenelement 31 mehrere elastisch verformbare Klemmrippen 45 auf, die sich parallel zur Längserstreckung des Scheibenventils 2 beziehungsweise zur Drehachse der Steuerwelle 33 stegförmig erstrecken, wie in Figur 8 dargestellt. Die Dimensionierung der Klemmrippen 45 ist dabei derart gewählt, dass ein Reibschluss zwischen Zwischenelement 31 und der Schraubenfeder 41 sowie zwischen Zwischenelement 31 und Ventilscheibe 25 aufgrund der durch die Elastizität bereitgestellten Vorspannkraft entsteht, der den Zusammenhalt der Vormontagebaugruppe 30 gewährleistet.

Weiterhin ist bevorzugt vorgesehen, dass die Steuerwelle 33 auf der dem Federelement 41 abgewandten Seite der Stützvorsprünge 42 einen Radialvorsprung 46 aufweist, wie in Figur 6 gezeigt. Bezüglich der Vorsprünge 35 und 36 ist der Radialvorsprung 46 in einer bestimmten, vordefinierten Relativposition an der Steuerwelle 33 angeordnet und insbesondere einstückig mit dieser ausgebildet, so das bei der Montage des Scheibenventils 2 beziehungsweise der Vormontagebaugruppe 30 eine eindeutige Relativposition von der Ventilscheibe 25 zu dem Radialvorsprung 46 besteht. Dies wird durch die jeweiligen, nur eine Montagemöglichkeit bietenden Verbindungen gewährleistet.

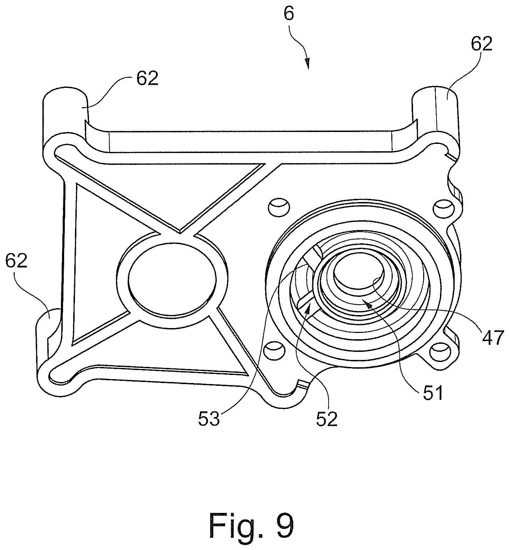

Figur 9 zeigt den Deckel 6 in einer perspektivischen Darstellung von unten beziehungsweise aus Sicht des Verteilergehäuses 5. Der Deckel 6 weist eine Lageröffnung 47 auf, durch welche das dem freien Ende 34 gegenüberliegende Ende der Steuerwelle 33 durchführbar ist. Dieses Ende ist als Koppelende 48 ausgebildet und weist dazu an seinem Außenumfang eine Außenverzahnung 49 auf, die mit dem Stellantrieb 3 koppelbar beziehungsweise in Wirkverbindung bringbar ist. Wie in Figur 2 gezeigt, bilden die Stützvorsprünge 42 auf ihrer dem ersten Axialanschlag 43 gegenüberliegenden Seite einen zweiten Axialanschlag 50, mit welchem sich die Steuerwelle 33 an der Innenseite des Deckels 6 abstützt. Zur Abdichtung ist vorteilhafterweise ein Dichtring 51 vorgesehen. Die Lageröffnung 47 sowie das Koppelende 48 der Steuerwelle 33 sind derart ausgebildet, dass die Steuerwelle 33 in der Lageröffnung 47 radial und an dem Deckel 6 axial gelagert ist.

Wie aus Figur 9 hervorgeht, weist der Deckel 6 an seiner Unterseite außerdem bevorzugt zwei Drehanschläge 52 und 53 auf, die von jeweils einem Axialvorsprung auf der Unterseite des Deckels gebildet werden, und, die im montierten Zustand des Scheibenventils 2 im Bewegungsweg des Radialvorsprungs 46 liegen. Wird die Steuerwelle 33 mittels des Stellantriebs 3 betätigt, so lässt sie sich nur zwischen den zwei durch Drehanschläge 42 und 43 definierten Positionen verdrehen, bis jeweils der Radialvorsprung 46 gegen einen der Drehanschläge 52 oder 53 stößt. Natürlich können die Drehaufschläge 52 und 53 auch von einem einzigen, entsprechend breiten beziehungsweise geformten Vorsprung des Deckels 6 gebildet werden.

Der Deckel 6 sowie das Verteilergehäuse 5 sind derart ausgebildet, dass sie nur in einer bestimmten Relativposition zueinander miteinander verbunden werden können, so dass der Deckel 6 eine eindeutige Ausrichtung auf dem Verteilergehäuse 5 erfährt. Dadurch liegen die Drehanschläge 53 und 52 auf bekannten Positionen bezüglich der Kammern 55, 56 beziehungsweise bezüglich der Durchströmungsöffnungen 19 und 20. Durch die drehfeste Verbindung der Ventilscheibe 25 mit der Steuerwelle 33 sowie die gehäusefeste Lage der Dichtscheibe 18, und die bekannte Anordnung des Radialvorsprungs sowie der Drehanschläge 52, 53, kann somit bei der Montage mittels des Stellantriebs das Scheibenventil 2 in eine eindeutige Ausgangsstellung verbracht werden, ohne dass dies anhand eines tatsächlich eingestellten Volumenstroms durch das Scheibenventil 2 hindurch verifiziert werden müsste.

Bei der Montage wird zunächst die Vormontagebaugruppe 30 gemäß Figur 6 zusammengesetzt. Anschließend wird die Vormontagebaugruppe in das Verteilergehäuse 5, in welchem bereits die Profildichtung 15 sowie die Dichtscheibe 18 angeordnet und gemäß des Axialvorsprungs 17 ausgerichtet sind, eingeführt, so dass das freie Ende 34 der Steuerwelle 33 in die Lageraufnahme 21 eingreift, wie in Figur 2 gezeigt. Anschließend wird der Deckel 6 mit der Lageröffnung 47 auf das Koppelende 48 der Steuerwelle 33 aufgeschoben und die Steuerwelle 33 aufgrund des ersten Axialanschlags 43 gegen die Schraubenfeder 41 verspannt, so dass die Ventilscheibe 25 gegen die Dichtscheibe 18 federbeaufschlagt gedrängt wird, so dass die Ventilscheibe 25 und die Dichtscheibe 18 dicht aneinander anliegen und ein ungewolltes Durchströmen des Scheibenventils 2 sicher verhindert wird. Der Deckel 6 kann beispielsweise mit dem Verteilergehäuse 5, wie, wie in Figur 1 dargestellt, verschraubt werden, um eine dauerhafte Verbindung des Gehäuses 4 zu gewährleisten. Dadurch, dass die Drehanschläge 52, 53 und der Radialvorsprung 46 innerhalb des Gehäuses 4 angeordnet sind, sind sie sicher vor äußeren Einflüssen geschützt und insofern weniger schmutzanfällig. Ventilscheibe 25 und Dichtscheibe 18 trennen oder verbinden, je nach Drehstellung der Ventilscheibe 25, die Kammern 55 und 56 von einer dem Zulaufanschluss 7 zugeordneten Kammer 57, die von dem Verteilergehäuse 5, dem Deckel 6 und der Ventilscheibe 25 und Dichtscheibe 18 begrenzt wird.

Wie mit Bezug auf Figur 1 bereits erläutert, ist an dem Deckel 6 des Scheibenventils 2 die Antriebseinheit 3 montiert. Die Antriebseinheit 3 weist ein Gehäuse 58 auf, in welchem der Elektromotor 59 und das Getriebe 60 eine Antriebseinrichtung bildend angeordnet sind. Das Gehäuse 58 weist außerdem einen Steckanschluss 61 auf, mittels welchem die Antriebseinheit 3 elektrisch kontaktierbar ist.

Wie aus Figur 1 weiterhin ersichtlich, weist der Deckel 6 des Gehäuses 4 mindestens drei Anschraubdome 62 auf, die in dem vorliegenden Ausführungsbeispiel als zylinderförmige Vorsprünge senkrecht von Deckel 6 parallel zueinander hervorstehen. Bevorzugt ist noch ein vierter Anschraubdom 62 im hier nicht sichtbaren Bereich vorgesehen. Das Gehäuse 58 weist zu den Anschraubdomen 62 komplementäre Anschlussdome 63 auf, die im Unterschied zu den Anschraubdomen 62 eine sehr viel kürzere Axialerstreckung aufweisen.

Mit den Anschlussdomen 63 liegt das Gehäuse 58 auf den Anschraubdomen 62 auf, so dass die Achsen der jeweiligen Anschraubdome 62, 63 miteinander fluchten. Die Anschraubdome 62 weisen jeweils ein Innengewinde auf, in das eine Schraube 64, die durch eine Durchgangsöffnung des gegenüberliegenden Anschraubdoms 63 eingeführt ist, einschraubbar ist, um das Gehäuse 58 an dem Deckel 6 beziehungsweise an dem Gehäuse 4 zu befestigen, wie in Figur 1 beispielhaft für eine Schraube dargestellt. Anstelle der Anschraubdome 63 können auch anders geformte Gegenelemente für die Anschraubdome 62 an dem Gehäuse 58 vorgesehen sein, wie beispielsweise Aufnahmevertiefungen oder seitlich vorstehende Laschen. Im einfachsten Fall lässt sich das Gehäuse 58 mit einem Gehäuseteil direkt auf die Anschraubdome 62 aufschrauben. Ebenso können auch die Anschraubdome 62 an dem Gehäuse 58 und die Anschraubdome 63 an dem Gehäuse 4 beziehungsweise Deckel 6 angeordnet sein.

Die Größe der Anschraubdome 62 und 63 ist gemäß Figur 1 derart gewählt, dass die Gehäuse 58 und 4 im Wesentlichen beabstandet zueinander angeordnet sind, so dass zwischen ihnen ein thermisch isolierender Luftspalt vorliegt. Der Luftspalt 66 verhindert, dass die Antriebseinheit 3 durch das durch das Scheibenventil 2 geführte und gegebenenfalls erhitzte Medium erwärmt und dadurch in seiner Funktionsfähigkeit gestört werden könnte.

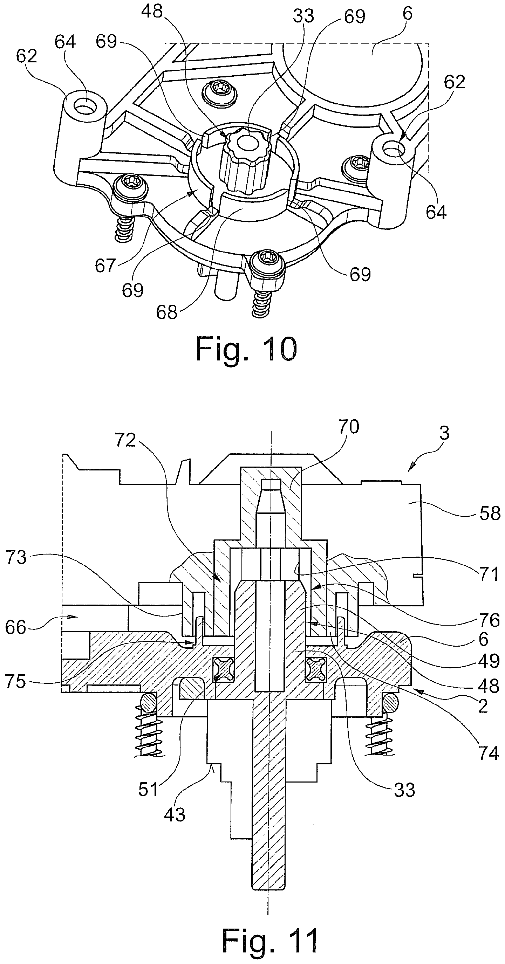

Wie aus Figur 10 ersichtlich, die eine perspektivische Draufsicht auf den Deckel 6 des Gehäuses 4 zeigt, weist der Deckel 6, dem Koppelende 48 der Steuerwelle 38 zugeordnet, einen Spritzschutz 67 auf. Der Spritzschutz 67 weist eine koaxial zur Steuerwelle 33 angeordnete, das Koppelende 48 umfangsseitig umgebende erste Schutzwand 68 auf, die einstückig mit dem Deckel 6 ausgebildet ist. Die erste Schutzwand 68 weist vier gleichmäßig über ihren Umfang verteilt angeordnete schmale Aussparungen 69 auf. Der Durchmesser der Schutzwand 69 ist dabei derart gewählt, dass er beabstandet zu dem Koppelende 33 der Steuerwelle 48 liegt. Im vorliegenden Ausführungsbeispiel ist die Höhe der Schutzwand 68 derart gewählt, dass sie axial von dem Koppelende 33 überragt wird.

Figur 11 zeigt eine Schnittdarstellung durch die Ventileinrichtung 1 gemäß dem Schnitt von Figur 2, wobei nun auch das Gehäuse 58 der Antriebseinheit 3 dargestellt ist, während das Scheibenventil 2 nur teilweise dargestellt ist. Wie zuvor bereits erwähnt, ist nun ersichtlich, dass die Antriebseinheit eine Antriebswelle 70 aufweist, die die Ausgangswelle des Getriebes 60 darstellt. Die Verbindung zum Getriebe 60 sowie das Getriebe 60 selbst sind hier aus Übersichtlichkeitsgründen nicht dargestellt. Die Antriebswelle 70 weist an ihrer freien, dem Scheibenventil 2 zugewandten Stirnseite beziehungsweise an ihrem Koppelende eine Axialvertiefung auf, welche an ihrer Mantelinnenfläche eine Polygonform aufweist, die eine Innenverzahnung 71 bildet. Die Innenverzahnung 71 ist komplementär zu der Außenverzahnung 49 der Steuerwelle 33 ausgebildet, so dass die Innenverzahnung und die Außenverzahnung 49 formschlüssig miteinander in Eingriff stehen und eine formschlüssige Zahnkupplung 76 bilden, so dass ein Drehmoment von der Antriebswelle 70 auf die Steuerwelle 33 bevorzugt spielfrei übertragbar ist. Zur Kompensation von Fertigungstoleranzen oder gegebenenfalls temperaturbedingten Längenänderungen ist das Koppelende 48 der Steuerwelle 33 axial spielbehaftet in der Antriebswelle 70 gelagert. Die Außenverzahnung 49 und die Innenverzahnung 71 bilden zusammen eine Koppeleinrichtung 72, durch welche die Antriebswelle 70 und die Steuerwelle 33 miteinander zur Drehmomentübertragung wirkverbunden sind.

Das Gehäuse 58 der Antriebseinheit 3 weist der Koppeleinrichtung 72 zugeordnete zweite Schutzwände 73 und 74 auf, die ebenfalls koaxial zur Drehachse von Antriebswelle 70 und Steuerwelle 33 angeordnet sind. Dabei weist die zweite Schutzwand 74 einen Durchmesser auf, der kleiner ist als der Durchmesser der ersten Schutzwand 68, während die zweite Schutzwand 73 einen Durchmesser aufweist, der größer ist als der der Schutzwand 68. Dadurch wird zwischen den Schutzwänden 73 und 74 eine kreisringförmige Aufnahmevertiefung gebildet, in welche die erste Schutzwand 68 eindringt, wenn das Gehäuse 58 auf dem Gehäuse 4 montiert wird, wie in Figur 11 dargestellt. Die Durchmesser sind dabei derart gewählt,
dass die ersten und die zweiten Schutzwände 68, 73, 74 zusammen eine Labyrinthdichtung 75 bilden, die der Koppeleinrichtung 72 zugeordnet ist. Zweckmäßigerweise sind auch die zweiten Schutzwände 73, 74 mit schmalen Aussparungen versehen, die bevorzugt versetzt zu den Aussparungen 69 angeordnet sind. Die Aussparungen 69 sowie ein axialer Abstand zwischen den freien Stirnseiten der Stirnwände 68, 73, 74 zu dem jeweils gegenüberliegenden Gehäuse, bewirken eine Belüftung und Kühlung der Koppeleinrichtung 72. Durch die Labyrinthdichtung 75 wird zudem gewährleistet, dass kein Spritzwasser oder sonstige Schmutzpartikel in den Bereich der Koppeleinrichtung 72 gelangen können, so dass auch verhindert wird, dass Feuchtigkeit im Bereich der Antriebswelle 70 in die Antriebseinheit 3 oder an der Steuerwelle 33 vorbei in das Scheibenventil 2 gelangen könnte. Dadurch wird gewährleistet, dass das durch das Scheibenventil 2 geförderte Medium nicht verunreinigt wird und Feuchtigkeit nicht bis in die elektrischen/elektronischen Bestandteile der Antriebseinheit 3 gelangen kann.

Die Koppeleinrichtung 72, die in dem Bereich des Luftspalts 66 liegt, erlaubt darüber hinaus auf einfache Art und Weise, dass das Scheibenventil 2 und die Antriebseinheit 3 jeweils vollständig vormontiert werden können, bevor sie gemäß Figur 1 oder 11 zusammengefügt werden. Durch die Außenverzahnung 48 und die Innenverzahnung 71 beziehungsweise durch die jeweilige Polygonform wird auf einfache Art und Weise eine Steckverbindung zwischen Steuerwelle 33 und Antriebswelle 70 ermöglicht, so dass zur Koppelung der Wellen miteinander lediglich die Antriebseinheit 3 auf das Scheibenventil 2 aufgesteckt werden muss. Dadurch ergibt sich auch eine einfache und schnelle Montage der Scheibenventileinrichtung 1. Da die Koppeleinrichtung 72 zwischen den Gehäusen 58 und 4 angeordnet ist, lässt sich darüber hinaus auch auf einfache Art und Weise ein Baukastensystem realisieren, bei welchem unterschiedliche Scheibenventile 2 mit unterschiedlichen Antriebseinheiten 3 kombinierbar sind. Dabei muss es sich nicht unbedingt um Scheibenventile 2 gemäß dem vorliegenden Ausführungsbeispiel handeln, und es können selbstverständlich auch andere Ventileinheiten, wie beispielsweise Kugelventile oder dergleichen mit der Antriebseinheit 3 kombiniert werden.

## Patentansprüche

1. Ventileinrichtung (1), mit einem Ventil, insbesondere Scheibenventil (2), das ein erstes Gehäuse (4) mit mehreren Anschlüssen (7-9) für ein flüssiges und/oder gasförmiges Medium aufweist, und mit einer Antriebseinheit (3), die ein zweites Gehäuse (58) mit einer darin angeordneten Antriebseinrichtung (59,60) aufweist, wobei die Gehäuse (4,58) zumindest im Wesentlichen beabstandet zueinander angeordnet sind, sodass zwischen ihnen ein thermisch isolierender Luftspalt (66) vorliegt, wobei das Ventil (2) eine Steuerwelle (33) und die Antriebseinheit (3) eine mit der Antriebseinrichtung (59,60) wirkverbundene und mit der Steuerwelle (33) durch eine Koppeleinrichtung (72) wirkverbundene/wirkverbindbare Antriebswelle (70) aufweist, wobei die Koppeleinrichtung (72) zwischen dem ersten und dem zweiten Gehäuse (4,58) angeordnet ist, und wobei der Koppeleinrichtung (72) ein Spritzschutz (67) zugeordnet ist, der wenigstens eine die Koppeleinrichtung (72) umfangsseitig zumindest im Wesentlichen umgebende erste Schutzwand (68) aufweist, **dadurch gekennzeichnet, dass** der Spritzschutz (67) wenigstens eine die Koppeleinrichtung (72) umfangsseitig zumindest im Wesentlichen umgebende zweite Schutzwand (73,74) aufweist, die einen größeren oder kleineren Durchmesser als die erste Schutzwand (68) aufweist, um zusammen mit der ersten Schutzwand (68) eine Labyrinthdichtung (75) für die Koppeleinrichtung (72) zu bilden, wobei die wenigstens eine erste Schutzwand (68) einstückig mit dem ersten Gehäuse (4) und die wenigstens eine zweite Schutzwand (73,74) einstückig mit dem zweiten Gehäuse (58) ausgebildet ist, und wobei ein axialer Abstand zwischen den freien Stirnseiten der Schutzwände (68, 73, 74) zu dem jeweils gegenüberliegenden Gehäuse (4, 58) vorgesehen ist, und wobei das erste und/oder das zweite Gehäuse (4,58) wenigstens einen Abstandshalter aufweist, der insbesondere als Anschraubdom (62,63) ausgebildet ist.

2. Ventileinrichtung nach Anspruch 1, **dadurch gekennzeichnet, dass** die Koppeleinrichtung (72) als formschlüssige Kupplung (76) ausgebildet ist.

3. Ventileinrichtung nach einem der vorhergehenden Ansprüche, **dadurch gekennzeichnet, dass** die Koppeleinrichtung (72) als Zahnkupplung (76) oder Klauenkupplung ausgebildet ist.

4. Ventileinrichtung nach einem der vorhergehenden Ansprüche, **dadurch gekennzeichnet, dass** die Koppeleinrichtung (72) von einer Außenverzahnung (49) der Steuerwelle (33) und einer mit der Außenverzahnung (49) in Eingriff stehenden Innenverzahnung (71) der Antriebswelle (70) gebildet wird.

5. Ventileinrichtung nach einem der vorhergehenden Ansprüche, **dadurch gekennzeichnet, dass** die erste Schutzwand (68) eine oder mehrere Aussparungen (69) aufweist.

6. Ventileinrichtung nach einem der vorhergehenden Ansprüche, **dadurch gekennzeichnet, dass** die zweite Schutzwand (73, 74) eine oder mehrere Aussparungen aufweist.

7. Ventileinrichtung nach den Ansprüchen 5 und 6, **dadurch gekennzeichnet, dass** die Aussparungen (69) der ersten Schutzwand (68) und der zweiten Schutzwand (73, 74) versetzt zueinander angeordnet sind.

## Claims

1. A valve arrangement (1) having a valve, in particular a disk valve (2), which has a first housing (4) with several connections (7-9) for a fluid and/or gaseous medium, and with a drive unit (3), which has a second housing (58) with a drive mechanism (59, 60) arranged therein, wherein the housings (4, 58) are at least essentially spaced apart from one another, so that there is a thermally insulating air gap (66) between them, wherein the valve (2) has a control shaft (33) and the drive unit (3) a drive shaft (70) that is operatively connected to the drive mechanism (59, 60) and operatively connected/operatively connectable to the control shaft (33) by means of a coupling device (72), wherein the coupling device (72) is arranged between the first and the second housing (4, 58), and wherein a splash guard (67) is allocated to the coupling device (72), which splash guard (67) at least has one first protective panel (68) at least essentially circumferentially surrounding the coupling device (72), **characterized in that** the splash guard (67) has at least one second protective panel (73, 74) circumferentially surrounding at least essentially the coupling device (72), which second protective panel (73, 74) has a larger or smaller diameter than the first protective panel (68) in order to form a labyrinth seal (75) for the coupling device (72) together with the first protective panel (68), wherein the at least one first protective panel (68) is configured in one piece with the first housing (4), and that the at least one second protective panel (73, 74) is configured in one piece with the second housing (58), and wherein an axial distance is provided between the free front sides of the front panels (68, 73, 74) to the respectively opposite housing (4, 58), and wherein the first and/or the second housing (4, 58) has at least one spacer which in particular is configured as a screw dome (62, 63).

2. The valve arrangement according to claim 1, **characterized in that** the coupling device (72) is configured as a positive coupling (76).

3. A valve arrangement according to any one of the preceding claims, **characterized in that** the coupling device (72) is configured as a gear coupling (76) or as a claw coupling.

4. A valve arrangement according to any one of the preceding claims, **characterized in that** the coupling device (72) is formed by an external gearing (49) of the control shaft (33) and by an internal gearing (71) of the drive shaft (70) engaging in the external gearing (49).

5. A valve arrangement according to any one of the preceding claims, **characterized in that** the first protective panel (68) has one or more recesses (69).

6. A valve arrangement according to any one of the preceding claims, **characterized in that** the second protective panel (73, 74) has one or more recesses.

7. A valve arrangement according to claims 5 and 6, **characterized in that** the recesses (69) of the first protective panel (68) and of the second protective panel (73, 74) are offset with respect to one another.

## Revendications

1. Système de soupape (1), avec une soupape, notamment une soupape de disque (2), comprenant un premier boîtier (4) avec plusieurs connexions (7-9) pour un milieu liquide et/ou gazeux, et avec une unité d'entraînement (3) ayant un second boîtier (58) avec un dispositif d'entraînement (59, 60) y disposé, les boîtiers (4, 58) étant au moins sensiblement espacés l'un de l'autre de telle manière qu'une fente d'air (66) thermiquement isolante est formée entre eux, la soupape (2) ayant un arbre de commande (33) et ladite unité d'entraînement (3) ayant un arbre d'entraînement (70) qui est relié de façon opérationnelle avec le dispositif d'entraînement (59, 60), et qui est relié ou peut être relié de façon opérationnelle avec l'arbre de commande (33) au moyen d'un dispositif d'accouplement (72), le dispositif d'accouplement (72) étant disposé entre le premier et le second boîtier (4, 58), et le dispositif d'accouplement (72) étant associé à une protection anti-éclaboussures (67) qui présente au moins une première paroi de protection (68) entourant au moins sensiblement le dispositif d'accouplement (72) à la périphérie, **caractérisé en ce que** la protection anti-éclaboussures (67) présente au moins une seconde paroi de protection (73, 74) entourant au moins sensiblement le dispositif d'accouplement (72) à la périphérie, et présentant un diamètre inférieur ou supérieur à la première paroi de protection (68), afin de former, ensemble avec la première paroi de protection (68), un joint d'étanchéité à labyrinthe (75) pour le dispositif d'accouplement (72), l'au moins une première paroi de protection (68) étant formée d'un seul tenant avec le premier boîtier (4), et l'au moins une seconde paroi de protection (73, 74) étant formée d'un seul tenant avec le second boîtier (58), et une distance axiale étant prévue entre les faces frontales libres des parois de protection (68, 73, 74) et le boîtier (4, 58) respectivement opposé, et le premier et/ou le second boîtier (4, 58) présentant au moins un espaceur, notamment formé en tant que bossage pour vis (62, 63).

2. Système de soupape selon la revendication 1, **caractérisé en ce que** le dispositif d'accouplement (72) est réalisé sous forme d'accouplement à engagement positif (76).

3. Système de soupape selon l'une quelconque des revendications précédentes, **caractérisé en ce que** le dispositif d'accouplement (72) est réalisé sous forme d'embrayage à denture (76) ou sous forme de crabot.

4. Système de soupape selon l'une quelconque des revendications précédentes, **caractérisé en ce que** le dispositif d'accouplement (72) est constitué par une denture extérieure (49) de l'arbre de commande (33) et une denture intérieure (71) de l'arbre d'entraînement (70) étant en prise avec la denture extérieure (49).

5. Système de soupape selon l'une quelconque des revendications précédentes, **caractérisé en ce que** la première paroi de protection (68) présente un ou plusieurs évidements (69).

6. Système de soupape selon l'une quelconque des revendications précédentes, **caractérisé en ce que** la seconde paroi de protection (73, 74) présente un ou plusieurs évidements.

7. Système de soupape selon les revendications 5 et 6, **caractérisé en ce que** les évidements (69) de la première paroi de protection (68) et de la seconde paroi de protection (73, 74) sont disposés décalés l'un par rapport à l'autre.
